Europäisches Patentamt

European Patent Office

Office européen des brevets

(19)

(11) Veröffentlichungsnummer: **0 330 006**
**A2**

(12) ## EUROPÄISCHE PATENTANMELDUNG

(21) Anmeldenummer: **89102045.5**

(22) Anmeldetag: **06.02.89**

(51) Int. Cl.4: **H04N 5/08**

(30) Priorität: **24.02.88 BG 83105/88**

(43) Veröffentlichungstag der Anmeldung:
**30.08.89 Patentblatt 89/35**

(84) Benannte Vertragsstaaten:
**CH DE FR GB LI NL**

(71) Anmelder: **BULGARSKA TELEVISIA kam KOMITET sa TELEVISIA i RADIO**
**San-Stefano Strasse 29**
**Sofia(BG)**

(72) Erfinder: **Vladkov, Emil Pentchev, Dipl.-Ing.**
**Komplex Serdika Block 21, App.40**
**BG-1303 Sofia(BG)**

(74) Vertreter: **Ebbinghaus, Dieter et al**
**Patentanwälte v. Füner, Ebbinghaus, Finck**
**Mariahilfplatz 2 & 3**
**D-8000 München 90(DE)**

(54) **Verfahren und Vorrichtung zum präzisen Abtrennen von Synchronimpulsen.**

(57) Das erfindungsgemäße Verfahren basiert auf der Fixierung des komplexen Videosignals auf die Pegel "Synchron" und "Schwarz", dem Summieren der beiden unterschiedlich fixierten Signale und einem Vergleich mit dem ständigen Fixierpegel, wodurch die Verarbeitung vereinfacht und die Schnittgenauigkeit erhöht wird. Die Vorrichtung zur Durchführung des Verfahrens enthält zwei Fixiereinheiten (1, 2), einen Summator (3) und einen Pegelkomparator (4).

FIG. 1

EP 0 330 006 A2

## Verfahren und Vorrichtung zum präzisen Abtrennen von Synchronimpulsen

Die Erfindung bezieht sich auf ein Verfahren und eine Vorrichtung zum präzisen Abtrennen von Synchronimpulsen, die bei Fernseh-Sendeeinrichtungen und in einigen speziellen Bereichen der Fernsehtechnik angewendet werden.

Aus AMPEX, TBC-3, Cat. Nr. 1809636-01 - FEB. 1985/401 ist ein Verfahren zum präzisen Abtrennen von Synchronimpulsen bekannt, bei dem das komplexe Videosignal von der Trägerfrequenz für die Farbigkeit filtriert wird, wonach es mit dem Schnittpegel (50 % Synchro) verglichen wird, der durch Demodulation des Schwarzpegels und Demodulation des Synchronpegels und Mittelwertbildung aus beiden erhalten wird.

Das bekannte Verfahren ist verhältnismäßig kompliziert durchführbar, weil es eine ganze Reihe zusätzlicher Be-und Verarbeitungsschritte umfaßt, z.B. grobes Abtrennen der Synchronimpulse, Schlüssel-Demodulation mit Speicherung der den Synchronsignalhub bestimmenden Pegel, Unterbrechung der Schlüsselmodulationen der Pegel während der löschenden Intervalle nach Kader, bei drop-out, bei Impulsrauschen. Dies erfordert eine Mittelung der Pegel über größere Zeitintervalle, wodurch die Genauigkeit der Abtrennung vermindert wird. Diese Genauigkeit wird in gewissem Maße weiter vermindert, weil zuvor eine Frequenzfilterung des Signals notwendig ist, die mit der Verschiebung der Front bzw. der abgetrennten Synchronsignale verbunden ist.

Aus der genannten Druckschrift ist ferner eine Vorrichtung zur Durchführung des Verfahrens bekannt, bei der der Ausgang eines Filters für die Trägerfrequenz für die Farbigkeit mit einem Eingang eines Pegelkomparators und mit dem Eingang eines groben Synchronselektors (ca. 25 % gegenüber Schwarzpegel) verbunden ist. Der Ausgang des Pegelkomparators ist an zwei Schlüsselimpulserzeuger (für den Synchron-Pik und für die hintere Fläche) angeschlossen, die mit den Schlüsseleingängen zweier dynamischer sample/hold-Speicher in Verbindung stehen, deren Signaleingänge mit dem Ausgang des Filters für die Trägerfrequenz der Farbigkeit verbunden sind und deren Ausgänge an die Eingänge eines Summators angeschlossen sind. Der Ausgang des Summators steht mit dem zweiten Eingang des Pegelkomparators in Verbindung, dessen Ausgang ein Ausgang des Synchronseparators ist. Der Sperr-oder Inhibitionseingang des groben Synchronseparators steht über eine ODER-Schaltung mit den Ausgängen von Erzeugern für löschende Impulse nach Kader und des drop-out-Sperrimpulses in Verbindung.

Der bekannte Synchronseparator ist kompliziert aufgebaut und ungenau, weil die Zeitkonstanten der dynamischen Speicher und der Deformation der Synchron-Fronten wegen der Hochfrequenzfiltrierung groß sein müssen.

Aus PHILIPS-DATA H. - Okt. 1983 - IDA2577A P.283 DH 1984 ist eine vereinfachte Vorrichtung bekannt, die zum Einbau in integrale Synchronprozessoren bestimmt ist. Die Vor richtung enthält einen begrenzenden Synchronseparator, der mit einem Demodulator für den Schwarzpegel verbunden ist. Der Demodulator ist an einen zweiten Demodulator, einen Synchron-Demodulator angeschlossen, dessen Ausgang mit einem Eingang eines Differenzverstärkers verbunden ist, dessen zweiter Eingang mit dem Komposit-Synchronsignal gespeist wird und dessen Ausgang ein Ausgang der Vorrichtung ist.

Diese bekannte Vorrichtung hat eine geringe Genauigkeit, weil die Pegeldemodulatoren große Zeitkonstanten haben müssen. Deshalb ist auch die Anwendung dieser Vorrichtung im professionellen Bereich unzweckmäßig.

Der Erfindung liegt die Aufgabe zugrunde, ein Verfahren und eine Vorrichtung zum präzisen Abtrennen von Synchronimpulsen mit erhöhter Abtrenngenauigkeit zu schaffen, die eine vereinfachte und dabei stabilere technische Realisierung ermöglichen.

Diese Aufgabe wird durch ein Verfahren zum präzisen Abtrennen von Synchronimpulsen gelöst, bei dem das komplexe Videosignal hinsichtlich eines Synchronpegels (Pik-Synchronimpuls) als auch nach einem Schwarzpegel fixiert wird. Danach werden die fixierten Signale summiert und das Ergebnis der Summation wird mit dem Fixierpegel verglichen, bei dem die Ausgangs-Synchronimpulse erzeugt und geformt werden.

Die Aufgabe wird ferner durch eine Vorrichtung zum präzisen Abtrennen von Synchronimpulsen gelöst, deren Eingang für das komplexe Fernsehsignal mit dem Eingang der Fixiereinheit nach dem Schwarzpegel und mit dem Eingang der Fixiereinheit nach dem Synchronpegel verbunden ist. Die Ausgänge der beiden Fixiereinheiten sind an die beiden Eingänge eines Summators angeschlossen, dessen Ausgang mit einem Eingang eines Pegelkomparators verbunden ist. Der andere Eingang des Pegelkomparators ist an einen Bezugspegel angeschlossen, der gleich dem Fixierpegel ist. Der Ausgang des Pegelkomparators ist ein Ausgang der Vorrichtung.

Bei einer bevorzugten Weiterbildung der erfindungsgemäßen Vorrichtung ist die Fixiereinheit nach dem Schwarzpegel über einen elektronischen Umschalter an den entsprechenden Eingang des Summators angeschlossen. Der Steuereingang des elektronischen Umschalters steht mit dem Ausgang eines zweiten Pegelkomparators in Verbindung, dessen erster Eingang mit dem Ausgang der Fixiereinheit nach dem Schwarzpegel verbunden ist. Der Ausgang des ersten Komparators ist über einen Impulsformer zur Fixierung an den Impulseingang der Fixiereinheit nach dem Schwarzpegel angeschlossen. Es ist ferner möglich, den Ausgang des zweiten Komparators mit einem Steuereingang des Bezugsspannungsgenerators des ersten Komparators zu verbinden.

Das erfindungsgemäße Verfahren und die erfindungsgemäße Vorrichtung ermöglichen eine erhöhte Abtrennungsgenauigkeit bei vereinfachter Realisierung und erhöhter Stabilität.

Im folgenden werden Ausführungsbeispiele der erfindungsgemäßen Vorrichtung zum präzisen Abtrennen von Synchronimpulsen erläutert. Es zeigen:

Fig. 1 ein erstes Ausführungsbeispiel und

Fig. 2 ein zweites Ausführungsbeispiel der erfindungsgemäßen Vorrichtung zum präzisen Abtrennen von Synchronimpulsen,

Fig. 3 eine Standardform des komplexen Videosignals, z.B. entsprechend den in Europa weit verbreiteten Empfehlungen der CCIR - PAL B/G,

Fig. 4 Diagramme von Signalen während der Synchronselek-tion nach dem erfindungsgemäßen Verfahren und

Fig. 5 Diagramme zur Veranschaulichung der Beständigkeit der Synchronselektion gegenüber Synchronsignal-Hubschwankungen.

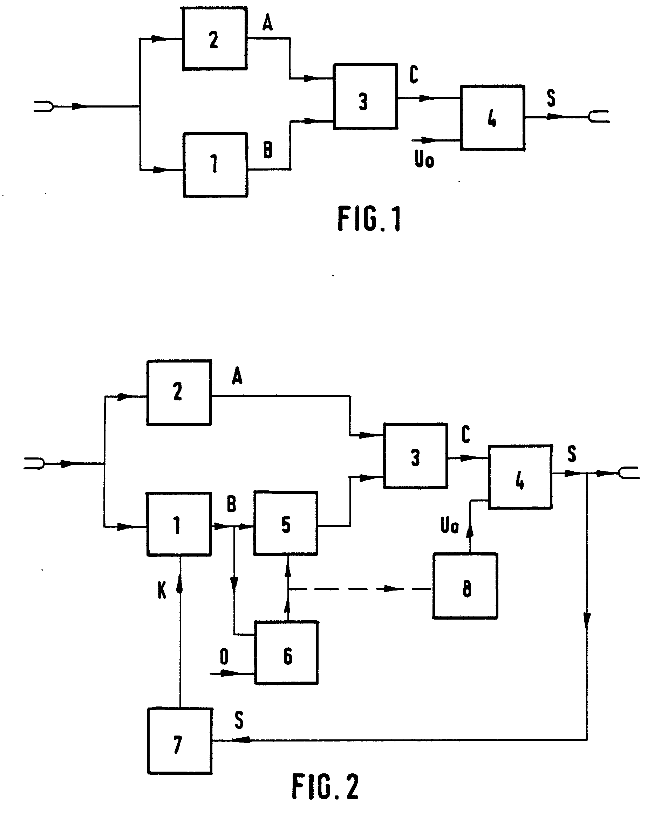

Die in Fig. 1 gezeigte Vorrichtung zum präzisen Abtrennen von Synchronimpulsen wird mit dem komplexen Fernsehsignal gespeist, das dem Eingang einer Fixiereinheit 1 für den Schwarzpegel und an dem Eingang einer Fixiereinheit 2 für den Synchronpegel zugeführt wird. Die Ausgänge der beiden Fixiereinheiten 1 und 2 sind mit den Eingängen eines Summators 3 verbunden, dessen Ausgang mit einem Pegelgenerator 4 in Verbindung steht. Der andere Eingang des Pegelgenerators 4 ist an einen Bezugspegel $U_o$ angeschlossen, der gleich dem summarischen Synchronsignal ist. Der Ausgang des Komparators 4 ist Ausgang der Vorrichtung.

Bei der in Fig. 2 gezeigten Vorrichtung ist die Fixiereinheit 1 für den Schwarzpegel über einen elektronischen Umschalter 5 an den entsprechenden Eingang des Summators 3 angeschlossen. Der Steuereingang des Umschalters 5 ist mit dem Ausgang eines zweiten Komparators 6 verbunden, dessen erster Eingang mit dem Ausgang der Fixiereinheit 1 für den Schwarzpegel in Verbindung steht. Der zweite Eingang des Komparators 6 wird mit einer Bezugsspannung gespeist, die gleich dem Fixierpegel ist. Der Ausgang des ersten Komparators 4 ist über einen Fixierimpulsformer 7 mit dem Impulseingang der Fixiereinheit 1 für den Schwarzpegel verbunden. Mit einer gestrichelten Linie ist die Möglichkeit einer Verbindung zwischen dem Ausgang des zweiten Pegelkomparators 6 und dem Steuereingang einer Bezugspannungsquelle 8 für den ersten Komparator 4 angedeutet.

Der Synchronseparator arbeitet folgendermaßen:

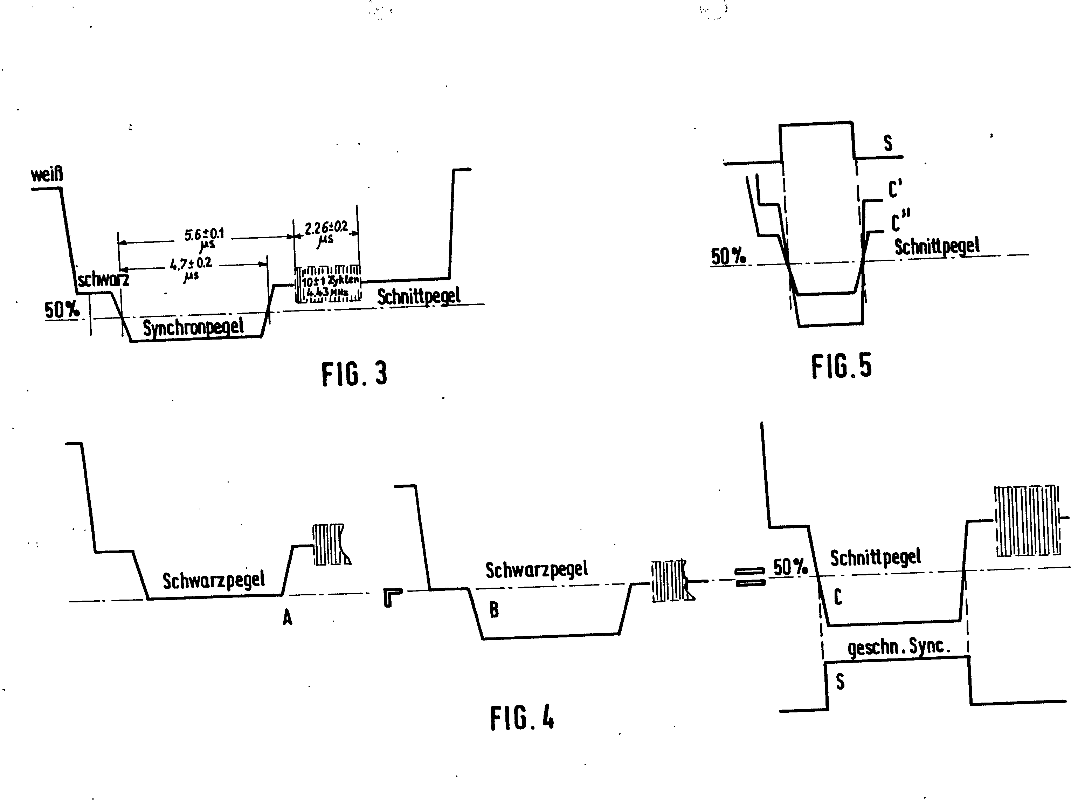

Das komplexe Fernsehsignal (Fig. 3) wird am Gleichstrompegel $U_o$ fixiert, z.B. auf Null, in der Fixiereinheit 1 auf den Synchronpegel (Signal A) und in der Fixiereinheit 2 auf den Schwarzpegel (Signal B). Die beiden fixierten, jedoch nach dem Synchron-Hubpegel verschobenen Signale werden summiert. Das Summensignal A + B = C (Fig. 4) ist der Fixierpegel. Durch den Vergleich des Summensignals C mit dem Bezugspegel $U_o$ im Komparator 4 wird das Synchronsignal S abgetrennt, dessen Fronten dem Fixierpegel entsprechen. Bei einer Veränderung des Synchronsignalhubs am Eingang infolge Fixierung auf Synchron 100 % (Signal A) und Synchron 0 % (Signal B) bleibt das Summensignal auf einem Pegel von 50 % bei einem Bezugspegel $U_o$, z.B. Null, fixiert, während das abgetrennte Signal S unverändert bleibt, d.h. seine Fronten werden nicht verschoben. Dies ist in Fig. 5 mit den beiden dem Hub nach unterschiedlichen Synchronsignalen C' und C" veranschaulicht. Bei Standardpegel des Signals für die Farbigkeit im komplexen Fernsehsignal betrifft der Schnittpegel $U_o$ das Signal für die Farbigkeit nicht (sh. Figuren 3 und 4) und das Eingangssignal braucht nicht gefiltert zu werden, wodurch die Genauigkeit der Abtrennung der Synchronimpulse erhöht wird. Soll jedoch mit einem höheren Pegel der Trägerfrequenz für die Farbigkeit gearbeitet werden oder der Schnittpegel im Bereich unter 50 % geändert werden, ist eine teilweise Filtrierung im Freqenzbereich der Trägerfrequenz für die Farbigkeit möglich. Die teilweise Filtrierung kann gleichzeitig mit dem Summieren der Signale A und B oder danach vollzogen werden. Eine solche teilweise Filtrierung beeinträchtigt die Abtrenngenauigkeit wesentlich weniger, weil sie keine völlige Unterdrückung des Signals für die Farbigkeit bezweckt, was nach dem herkömmlichen Verfahren unabdingbar ist. Eine Veränderung des Schnittpegels unter oder über 50 % Synchro ist erforderlichenfalls möglich durch bloße Veränderung des Pegels $U_o$ im Vergleich mit dem Summensignal C nach Plus oder Minus. Gleichzeitig mit seiner höheren Genauigkeit und der einfacheren Realisierung hat das erfindungsgemäße Verfahren noch den Vorteil, daß das Signal bearbeitet, nämlich nach dem Schwarzpegel fixiert wird. Diese Bearbeitung wird häufig in Fernsehgeräten benutzt, was es ermöglicht, sie für die Zwecke des genauen Synchronabtrennens zu benutzen.

Die in Fig. 2 gezeigte Vorrichtung veranschaulicht die Möglichkeit der Benutzung des am Ausgang abgegebenen Synchronsignals zum Formen des Fixiersignals in der Fixiereinheit 1 für den Schwarzpegel. Beim Einschalten des Signals am Eingang oder bei Inbetriebnahme der Vorrichtung ist die Fixiereinheit 1 für den Schwarzpegel nicht auf ihre normale Arbeit eingestellt; ihre Verbindung mit dem Summator 3 ist durch den elektronischen Umschalter 5 unterbrochen. Dem Eingang des Pegelkomparators 4 wird über den Summator 3 nur das auf den Synchronpegel fixierte Signal A zugeführt. Das Signal A wird vom Komparator auf den Pegel 100 % oder etwas unterhalb 100 % Synchron abgeschnitten, und zwar durch Einstellung des Bezugspegels $U_o$. Von dem am Ausgang abgegebenen Signal S erhält die Fixiereinheit 1 für den Schwarzpegel über den Schlüsselimpulsformer 7 die Fixierung steuernde Impulse K. Nach Einstellen des Signals B auf den Schwarzpegel und Fixierpegel $U_o$ verändert der auf den selben Pegel, z.B. Null, eingestellte zweite Komparator 6 seinen Ausgangspegel und schaltet über den elektronischen Umschalter 5 das auf den Schwarzpegel fixierte Signal B auf den Eingang des Summators 3, womit die Vorrichtung in normalen Betrieb versetzt wird. Bei sehr großer Genauigkeit kann über das Anlaßintervall auf die Bezugsspannung $U_o$ eingewirkt werden, was durch die gestrichelte Verbindung veranschaulicht ist. In diesem Fall sichert der zweite Komparator 6 durch seinen Ausgangspegel im Anlaßintervall über den Bezugspegelgenerator 8 einen Pegel von etwa 50 % Synchro des Schnitts nur für das auf 100 % Synchro fixierte Signal A. Bei normalen Betrieb wird der Bezugspegel auf $U_o$ eingestellt, der 50 % Synchro für das Summensignal C entspricht. Statt eines zweiten Komparators 6 kann ein Verzögerungsrelais benutzt werden, das vom Eingangssignal und von der Speisespannung des Synchronseparators gesteuert wird.

## Ansprüche

1. Verfahren zum präzisen Abtrennen von Synchronimpulsen, dadurch **gekennzeichnet,** daß das komplexe Videosignal auf Synchronpegel (A) fixiert und gleichzeitig eine Fixierung auf Schwarzpegel (B) vollzogen wird, daß die beiden fixierten Signale (A, B) summiert werden, und daß das summierte Signal (C) mit dem Fixierpegel verglichen und daraus die Ausgangs-Synchronimpulse (S) erzeugt werden.

2. Vorrichtung zur Durchführung des Verfahrens nach Anspruch 1, mit einem Komparator (3), dessen Ausgang ein Ausgang der Vorrichtung ist, dadurch **gekennzeichnet,** daß der Eingang für das komplexe Fernsehsignal mit den Eingängen einer Fixiereinheit (1) auf den Schwarzpegel und einer Fixiereinheit (2) auf den Synchronpegel verbunden ist, deren Ausgänge je an einen Eingang eines Summators (3) angeschlossen sind, dessen Ausgang mit dem einen Eingang des Pegelgenerators (4) verbunden ist, und dessen zweiter Eingang mit einem Bezugspegel gespeist ist, der gleich dem Fixierpegel ist.

3. Vorrichtung nach Anspruch 2, dadurch **gekennzeichnet,** daß die Fixiereinheit (1) auf den Schwarzpegel über einen elektronischen Umschalter (5) an den einen Eingang des Summators (3) angeschlossen ist, daß der Steuereingang des Umschalters (5) mit dem Ausgang eines zweiten Komparators (6) verbunden ist, dessen erster Eingang mit dem Ausgang der Fixiereinheit (1) auf den Schwarzpegel und dessen zweiter Eingang an die dem Fixierpegel gleiche Bezugsspannung angeschlossen ist, und daß der Ausgang des ersten Komparators (4) über einen Fixierimpulsfixierer (7) an den Impulseingang der Fixiereinheit (1) auf den Schwarzpegel angeschlossen ist.

4. Vorrichtung nach Anspruch 2 oder 3, dadurch **gekennzeichnet,** daß der Ausgang des zweiten Pegelkomparators (6) mit dem Steuereingang des Bezugsspannungsgenerators (8) für den ersten Komparator (4) verbunden ist.

37472.1

**FIG.1**

**FIG.2**

FIG. 3

weiß

5.6±0.1 μs

2.26±0.2 μs

4.7±0.2 μs

10±1 Zyklen 4.43 MHz

Schnittpegel

schwarz

50%

Synchronpegel

FIG. 5

S

C'

C"

50%

Schnittpegel

FIG. 4

Schwarzpegel

A

Schwarzpegel

B

50%

Schnittpegel

C

geschn. Sync.

S

Neu eingereicht / Newly file
Nouvellement déposé

EP 0 330 006 A2